# EUROPEAN PATENT APPLICATION

(11) **EP 4 520 561 A1**
(43) Date of publication of application: **12.03.2025**
(21) Application number: 23830374.7
(22) Date of filing: 29.06.2023
(51) Int. Cl.: B60J 1/00, B60J 1/20, E06B 5/00

(54) **WINDOW GLASS ASSEMBLY AND VEHICLE**

(30) Priority: 30.06.2022 CN 202210763902
(71) Applicant: Fuyao Glass Industry Group Co., Ltd., Fuzhou, Fujian 350300 (CN)
(72) Inventor: HUANG, Junlong, Fuzhou, Fujian 350300 (CN); JIANG, Lixing, Fuzhou, Fujian 350300 (CN); LIN, Conglong, Fuzhou, Fujian 350300 (CN); CHEN, Hua, Fuzhou, Fujian 350300 (CN); HUANG, Zhilin, Fuzhou, Fujian 350300 (CN)
(74) Representative: Herrero & Asociados, S.L.
(86) International application number: PCT/CN2023/103539
(87) International publication number: WO 2024/002203

(57) **Abstract**

The present application relates to a window glass assembly and a vehicle. The window glass assembly comprises: a glass plate (10), a connecting member (20), a support assembly (30), and a switch button assembly (40). A through hole (11) running through the glass plate in the thickness direction of the glass plate is formed in the glass plate (10). The connecting member (20) is fixedly provided on the plate surface of the glass plate (10) around the circumference of the through hole (11). The support assembly (30) is connected to the connecting member (20). The switch button assembly (40) is mounted on the support assembly (30), and a button of the switch button assembly (40) passes through the through hole (11).

## Description

### CROSS-REFERENCE TO RELATED APPLICATIONS

The present application claims priority to Chinese patent application No. 2022107639025, entitled "WINDOW GLASS ASSEMBLY AND VEHICLE", filed on June 30, 2022, the application of which is incorporated herein by reference in its entirety.

### TECHNICAL FIELD

The present application relates to the technical field of glass manufacture, and in particular, to a window glass assembly and a vehicle.

### BACKGROUND

With the development of the technology of vehicle, especially automobile, and the increasing number of users, the requirement of window glass assembly is becoming more and more personalized. The window glass assembly is usually mounted on the front side body of front door and the rear side body of the rear door of the vehicle, which is mainly used to improve the visibility for driving, avoid the blind zones one both sides caused by the excessive inclination of the front windshield, thereby improving the safety. In addition, a switch key assembly in related arts is generally provided within the vehicle and/or on the door, for controlling opening and closing of the door, or for controlling turning-on and turning-off of the lighting system. As the window glass assembly and the switch key assembly are separately designed parts, it is difficult to meet the requirements of the original equipment manufacturers (OEMs) for installation to the vehicle, high integration, and convenience of installation to the vehicle.

### SUMMARY

According to various embodiments of the present application, a window glass assembly and a vehicle are provided.

The technical solutions are described in the following. The window glass assembly includes:
a glass panel having a through hole formed thereon, the through hole extending through the glass panel in a thickness direction of the glass panel;
a connecting member fixedly arranged on a panel surface of the glass panel in a circumferential direction around the through hole;
a bracket assembly connected to the connecting member; and
a switch key assembly mounted on the bracket assembly, a key of the switch key assembly being inserted into the through hole.

In an embodiment, the connecting member is integrally formed between the panel surface of the glass panel and the bracket assembly by injection molding. Or, the connecting member is an adhesive member, and is bonded and fixed to the panel surface of the glass panel and the bracket assembly.

In an embodiment, a spacing between an inner edge of the connecting member and a hole edge of the through hole is defined as *d*, and *d*≥0.5 mm.

In an embodiment, the window glass assembly further includes a blocking member. The blocking member is connected to the bracket assembly. The blocking member abuts against the panel surface of the glass panel in the circumferential direction around the through hole. The blocking member is arranged between an inner edge of the connecting member and a hole edge of the through hole. An outer edge of the blocking member is connected to the inner edge of the connecting member.

In an embodiment, the blocking member and the bracket assembly are integrally formed by injection molding.

In an embodiment, the blocking member is a rigid member, and a spacing between an inner edge of the blocking member and the hole edge of the through hole is defined as *D1*, and *D1*≥2 mm.

In an embodiment, the blocking member is a flexible member. A spacing between an inner edge of the blocking member and the hole edge of the through hole is defined as *D1, D1*≥0 mm. The blocking member tightly abuts against the panel surface of the glass panel and is deformed.

In an embodiment, the blocking member is disposed at an included angle to the panel surface of the glass panel. A spacing between an abutting part of the blocking member abutting against the panel surface of the glass panel and the through hole is less than a spacing between a portion of the blocking member connected to the bracket assembly and the through hole. Or, the blocking member is perpendicular to the panel surface of the glass panel.

In an embodiment, at least two blocking members are provided, and are arranged in sequence in a sleeved manner in a radial direction of the through hole. A spacing between an inner edge of the blocking member closest to the through hole and the hole edge of the through hole is defined as *D1*, and *D1*≥0 mm.

In an embodiment, an interference amount between the blocking member and the panel surface of the glass panel is defined as *D2,* and *D2*>0 mm.

In an embodiment, *D2* further satisfies *D2*≤3 mm.

In an embodiment, a minimum spacing between a central axis of the through hole and an edge of the glass panel is defined as *S,* a radius of the through hole is defined as *r*, and *S* and *r* satisfy the following expression: *S*≥3*r.*

In an embodiment, the connecting member is a thermoplastic encapsulation, and a hardness of the connecting member is in a range of 50 Shore to 80 Shore. The connecting member is a thermosetting encapsulation, and a hardness of the connecting member is above 80 Shore.

In an embodiment, the window glass assembly further includes at least one first mounting member. At least one mounting hole is formed on the bracket assembly. The at least one first mounting member first mounting member is integrally formed on a hole wall of a corresponding one of the at least one mounting hole by injection molding. The switch key assembly is connected to the at least one first mounting member through at least one second mounting member.

The vehicle includes the described window glass assembly.

The details of one or more embodiments of the present application are provided in the accompanying drawings and the description hereinafter, so that other features, objectives, and advantages of the present application are more apparently from the detailed description, the drawings and claims.

### BRIEF DESCRIPTION OF THE DRAWINGS

The accompanying drawings that constitute part of the present application are intended to provide a further understanding of the present application. The exemplary embodiments of the present application as well as the description thereof are provided to illustrate the present application, and do not constitute improper limitations to the present application.

In order to more clearly illustrate the technical solutions in the embodiments of the present application, a brief description is given below for the drawings referred in the description of the embodiments. Apparently, the drawings in the following description are merely for some embodiments of the present application. For those of ordinary skill in the art, other drawings can also be obtained based on these drawings without involving any inventive effort.
FIG. 1 is a schematic view illustrating a structure of a bracket assembly mounted on a glass panel according to an embodiment of the present application.
FIG. 2 is a schematic sectional view taken along a line A-A in FIG. 1 according to an embodiment.
FIG. 3 is a schematic sectional view taken along a line A-A in FIG. 1 according to another embodiment.
FIG. 4 is a schematic sectional view taken along a line A-A in FIG. 1 according to yet another embodiment.
FIG. 5 is a schematic sectional view taken along a line A-A in FIG. 1 according to yet still another embodiment.
FIG. 6 is a schematic sectional view taken along a line A-A in FIG. 1 according to still further embodiment.
FIG. 7 is a schematic view illustrating a window glass assembly according to an embodiment of the present application.
FIG. 8 is a schematic sectional view taken along a line B-B in FIG. 7 according to an embodiment.

10. glass panel; 11. through hole; 111. hole edge of through hole; 20. connecting member; 21. inner edge of connecting member; 22. outer edge of connecting member; 23. flanging; 30. bracket assembly; 31. fitting hole; 311. hole edge of fitting hole; 32. mounting hole; 40. switch key assembly; 50. blocking member; 51. outer edge of blocking member; 52. inner edge of blocking member; 61. first mounting member; 62. second mounting member.

### DETAILED DESCRIPTION

In order to make the objectives, features, and advantages of the present application more apparent and understandable, the specific implementations of the present application will be illustrated in detail below in conjunction with the accompanying drawings. In the following description, numerous specific details are set forth in order to facilitate a thorough understanding of the present application. However, the present application can be implemented in many other ways different from those described herein, and those skilled in the art can make similar modifications without departing from the spirit of the application, so that the present application is not limited to the specific embodiments disclosed below.

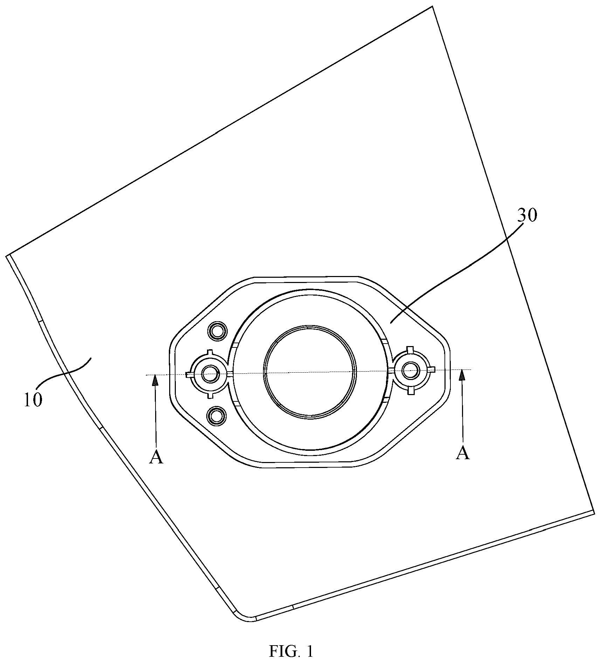

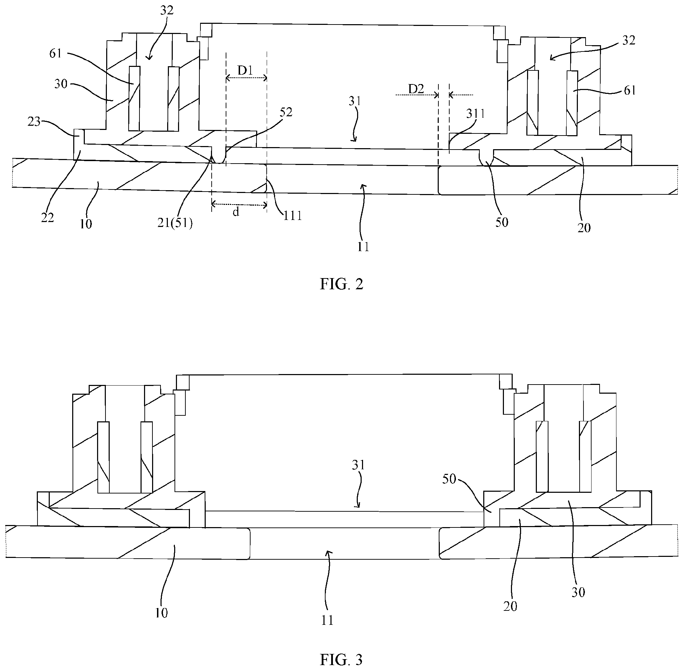

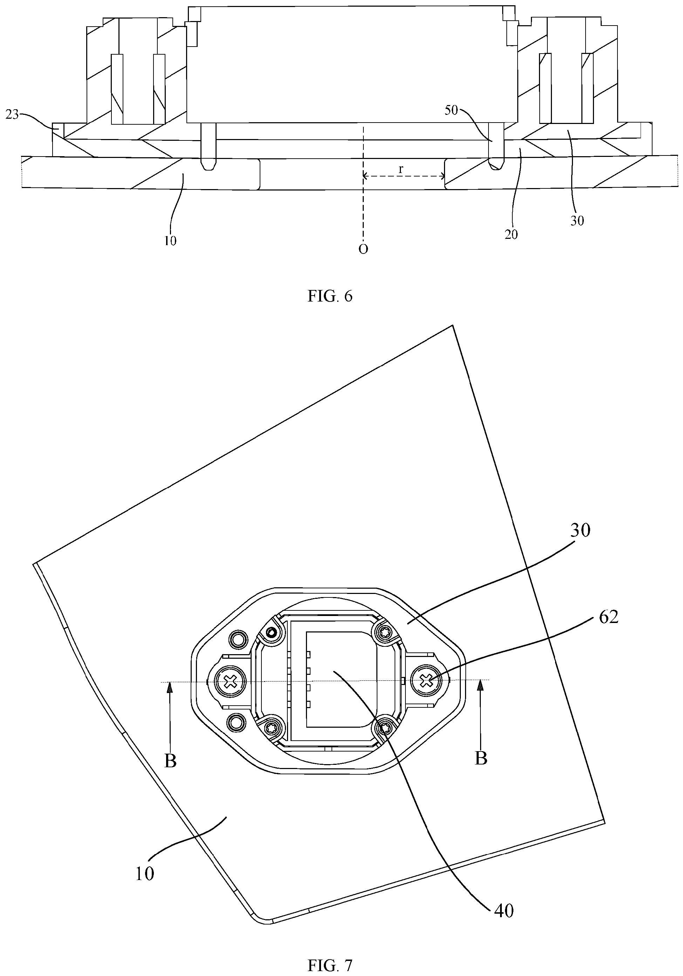

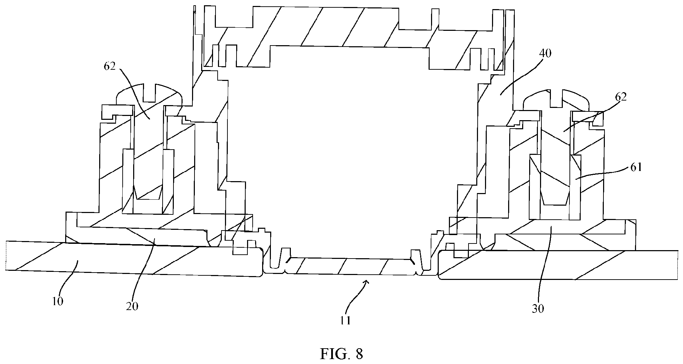

Reference is made to FIG. 1, FIG. 2, FIG. 7 and FIG. 8. FIG. 1 is a schematic view illustrating a bracket assembly 30 mounted on a glass panel 10 according to an embodiment of the present application; FIG. 2 is a schematic sectional view taken along a line A-A in FIG. 1 according to one of embodiments; FIG. 7 is a schematic view illustrating a window glass assembly according to an embodiment of the present application; and FIG. 8 is a schematic sectional view taken along a line B-B in FIG. 7 according to one of embodiments. In an embodiment of the present application, a window glass assembly is provided. The window glass assembly includes a glass panel 10, a connecting member 20, a bracket assembly 30 and a switch key assembly 40. A through hole 11 is formed on the glass panel 10, and extends through the glass panel 10 in a thickness direction of the glass panel 10. The connecting member 20 is fixedly arranged on a panel surface of the glass panel 10 in a circumferential direction around the through hole 11. The bracket assembly 30 is connected to the connecting member 20. The switch key assembly 40 is mounted on the bracket assembly 30. A key (not schematically shown) of the switch key assembly 40 is inserted through the through hole 11.

In the above-mentioned window glass assembly, the bracket assembly 30 is mounted on the glass panel 10 by the connecting member 20, and then the switch key assembly 40 is mounted on the bracket assembly 30. The key of the switch key assembly 40 may be inserted into the through hole 11 and extend out of the vehicle, so that the switch key assembly 40 may be integrated on the window glass assembly, thereby improving the integration degree, and facilitating the mounting to the vehicle.

Referring to FIG. 2, in an embodiment, the connecting member 20 is integrally formed between the panel surface of the glass panel 10 and the bracket assembly 30 by injection molding. Alternatively, the connecting member 20 is an adhesive member, and is respectively bonded and fixed to the panel surface of the glass panel 10 and the bracket assembly 30. In this way, when the connecting member 20 is integrally formed between the panel surface of the glass panel 10 and the bracket assembly 30 by injection molding, the bracket assembly 30 and the glass panel 10 can be firmly assembled together by the connecting member 20, and the processing efficiency is high, so that a batch production of the window glass assembly can be realized. Certainly, when the connecting member 20 is selected as an adhesive member, the panel surface of the glass panel 10 and the bracket assembly 30 can also be bonded and fixed together.

Referring to FIG. 2, in an embodiment, a spacing between an inner edge 21 of the connecting member 20 and a hole edge 111 of the through hole 11 is defined as *d,* and where *d* ≥0.5 mm. As such, the applicant has researched and found that, when the spacing d between the inner edge 21 of the connecting member 20 and the through hole 11 is set to not less than 0.5 mm, it can avoid undesirable phenomenon of cracking of the glass panel 10 caused by excessive stress on the hole edge 111 of the through hole 11 during an injection molding process.

It should be noted that, the connecting member 20 being arranged in the circumferential direction around the through hole 11 means that the connecting member 20 is a ring member. However, the shape of the connecting member 20 is not limited to a regular shape such as a circular ring shape, an elliptical ring shape, a square ring shape or an irregular shape, and specifically, can be flexibly adjusted and arranged according to actual requirements. In addition, the inner edge 21 of the connecting member 20 refers to an edge of the connecting member 20 closest to the through hole 11, that is, the inner edge 21 refers to an inner periphery of the connecting member 20.

Referring to FIG. 2, in an embodiment, the window glass assembly further includes a blocking member 50. The blocking member 50 is connected to the bracket assembly 30. The blocking member 50 abuts against the panel surface of the glass panel 10 in the circumferential direction around the through hole 11, and is arranged between the inner edge 21 of the connecting member 20 and the hole edge 111 of the through hole 11. An outer edge 51 of the blocking member 50 is connected to the inner edge 21 of the connecting member 20. In this way, in the production process of the window glass assembly, the bracket assembly 30 abuts against the panel surface of the glass panel 10 by means of the blocking member 50, and then the connecting member 20 is integrally formed between the bracket assembly 30 and the panel surface of the glass panel 10 by injection molding. In the injection molding process of the connecting member 20, the blocking member 50 serves to block materials, that is, prevents the materials used for injection molding from coming close to the edge of the through hole 11. Further, this can avoid undesirable phenomenon of cracking of the glass panel 10 caused by excessive stress on the hole edge 111 of the through hole 11 during an injection molding process.

It should be noted that, similar to the connecting member 20, the blocking member 50 is arranged in the circumferential direction around the through hole 11. In other words, the blocking member 50 is also a ring member. The shape of blocking member 50 is also not limited to a regular shape such as a circular ring shape, an elliptical ring shape or a square ring shape, and an irregular shape, and specifically, can be flexibly adjusted and arranged according to actual requirements, as long as the outer edge 51 of the blocking member 50 is connected to the inner edge 21 of the connecting member 20.

In addition, it should be noted that an inner edge 52 of the blocking member 50 refers to an edge of the blocking member 50 closest to the through hole 11, that is, the inner edge 52 refers to an inner periphery of the blocking member 50. The outer edge 51 of the blocking member 50 refers to an edge of the blocking member 50 farthest away from the through hole 11, that is, the outer edge 51 refers to an outer periphery of the blocking member 50.

It should be noted that the specific implementations of connecting the blocking member 50 to the bracket assembly 30 includes, but is not limited to, integral injection molding (specifically, for example, two-component injection process), bonding connection, or connection achieved by bolts, screws, pins, engagement, etc., which is not limited herein and can be flexibly adjusted and set according to the actual requirements.

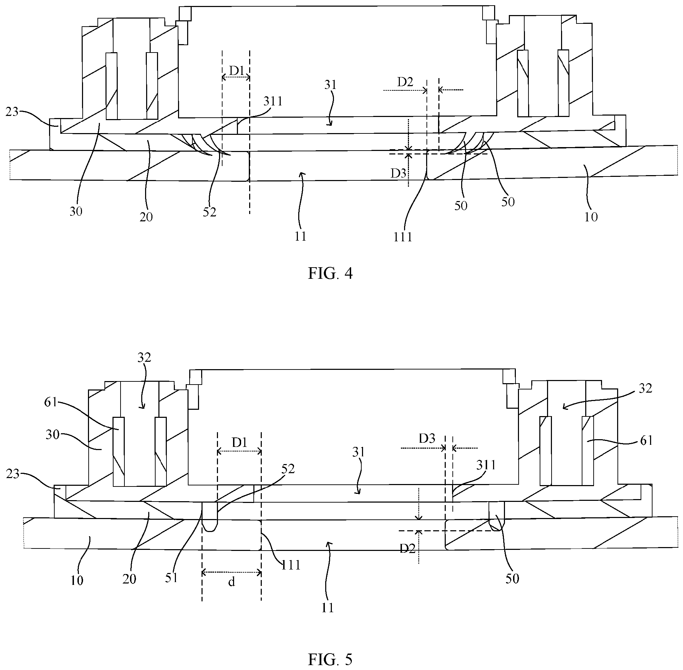

Reference is made to FIG. 2, FIG. 3 or FIG. 4. FIG. 3 is a schematic sectional view taken along a line A-A in FIG. 1 according to another embodiment. FIG. 4 is a schematic sectional view taken along a line A-A in FIG. 1 according to another embodiment. The difference between FIG. 3 and FIG. 2 lies in the position of the blocking member 50. The difference between FIG. 4 and FIG. 2 lies in the shape and the configuration of the blocking member 50. In an embodiment, the blocking member 50 and the bracket assembly 30 are integrally injection molded. In this way, the blocking member 50 is a portion of the bracket assembly 30 accordingly, and is obtained by injection molding together with the bracket assembly 30, so that the production efficiency is high, and the batch production can be realized.

Referring again to FIG. 2, in an embodiment, the blocking member 50 is a rigid member. The rigid member is not susceptible to deformation when being stressed. The spacing between the inner edge 52 of the blocking member 50 and the hole edge 111 of the through hole 11 is defined as *D1*, and where *D1*≥2 mm. Specifically, the blocking member 50 and the bracket assembly 30 are both selectively as hard plastic parts, so that the blocking member 50 and the bracket assembly 30 can be integrally formed by, for example, injection molding, and the production efficiency is higher. In addition, the blocking member 50 is, for example, an annular blocking block or plate, and the rigidity of the blocking member 50 can be ensured when the thickness of the blocking member 50 is sufficient. In this way, the blocking member 50 is an annular blocking block or plate, and is integrally formed with the bracket assembly 30 by injection molding. As a conventional sealing structure, the blocking member 50 abuts against the panel surface of the glass panel 10, that is, the interference amount of the blocking member 50 with the panel surface of the glass panel 10 can be set to but is not limited to 0. In addition, when *D1*≥2 mm, it can avoid undesirable phenomenon of cracking of the glass panel 10 caused by excessive stress on the hole edge 111 of the through hole 11 during an injection molding process. As an example, when *D1=2* mm, it is ensured that the bracket assembly 30 is compact in structure and small in volume.

In addition, the bracket assembly 30 is a hard plastic part, e.g., with a hardness of 80 Shore or higher, which can ensure structural strength and is not susceptible to damage. Certainly, it can be understood that, as some alternative embodiments, both the bracket assembly 30 and the blocking member 50 can be made of materials with relatively low hardness. For example, the hardness can be controlled between 50 Shore to 80 Shore.

Referring to FIG. 2 and FIG. 3 again, specifically, the bracket assembly 30 has a fitting hole 31 corresponding to the through hole 11. The fitting hole 31 can facilitate the mounting of the switch key assembly 40 to the through hole 11.

When the blocking member 50 is a rigid member, the blocking member 50 and the bracket assembly 30 may be specifically designed as an integrally structure formed by injection molding. In addition, the blocking member 50 may be disposed on a bottom surface of the bracket assembly 30, that is, a side surface of the bracket assembly 30 facing the glass panel 10 (referring to FIG. 2). Alternatively, the blocking member 50 may be disposed at the hole wall of the fitting hole 31, and may be formed by extending the hole wall of the fitting hole 31 toward the side surface of the glass panel 10 (referring to FIG. 3).

Referring to FIG. 4, in an embodiment, the blocking member 50 is a flexible member, that is, the blocking member 50 can be deformed and bent when being stressed. Specifically, the blocking member 50 is disposed at an included angle to the panel surface of the glass panel 10. The spacing between an abutting part of the blocking member 50 abutting against the panel surface of the glass panel 10 and the through hole 11 is smaller than the spacing between a portion of the blocking member 50 connected to the bracket assembly 30 and the through hole 11. The blocking member 50 tightly abuts against the panel surface of the glass panel 10 and is deformed. In this way, since the blocking member 50 is disposed at an included angle to the panel surface of the glass panel 10, and the spacing between the abutting part of the blocking member 50 abutting against the panel surface of the glass panel 10 and the through hole 11 is smaller than the spacing between the portion of the blocking member 50 connected to the bracket assembly 30 and the through hole 11, before the connecting member 20 is formed by injection molding, the blocking member 50 can tightly abut against the panel surface of the glass panel 10 as the bracket assembly 30 is mounted on the panel surface of the glass panel 10, so that the sealing performance can be ensured, and the connecting member 20 can be better formed by injection molding between the panel surface of the glass panel 10 and the bracket assembly 30. Specifically, the blocking member 50 and the bracket assembly 30 are, for example, specifically selected as hard plastic parts, and are integrally formed by injection molding. The thickness of the blocking member 50 is set to be small enough so that the blocking member 50 can be bent when being stressed. Certainly, the blocking member 50 is not limited to a hard plastic part, and for example, can be made of a soft material. The blocking member 50 and the bracket assembly 30 can, for example, be formed by two-component injection process. In addition, the blocking member 50 is not limited to being injection molded with the bracket assembly 30, and can also be connected to the bracket assembly 30 in other ways.

Referring to FIG. 4, in an embodiment, at least two blocking members 50 are provided, and are arranged in sequence in a sleeved manner in a radial direction of the through hole 11. In this way, the at least two blocking members 50 can respectively abut against the panel surface of the glass panel 10, so that the sealing performance can be further improved, and the connecting member 20 can be better formed by injection molding between the panel surface of the glass panel 10 and the bracket assembly 30.

Referring to FIG. 4, in an embodiment, a spacing between the inner edge 52 of the blocking member 50 closest to the through hole 11 and the hole edge 111 of the through hole 11 is defined as *D1*, and where *D1*≥0 mm.

Referring to FIG. 4, in an embodiment, two blocking members 50 are provided. Certainly, one, three, four or more blocking members 50 may be provided, and which can be flexibly adjusted and set according to the actual demand, which is not limited herein.

Referring to FIG. 4, in an embodiment, the interference amount between the blocking member 50 and the panel surface of the glass panel 10 is defined as *D2*, where *D2*>0 mm. Optionally, D2 can be set to, but is not limited to, in the range of 0 mm to 3 mm. Thus, the applicant has researched and found that, when D2 is set in this range, the sealing performance between the blocking member 50 and the panel surface of the glass panel 10 can be better ensured. It should be noted that the interference amount refers to the amount of deformation that occurs when the blocking member 50 tightly abuts against the panel surface of the glass panel 10.

Referring to FIG. 2 to FIG. 4, in an embodiment, when the blocking member 50 and the bracket assembly 30 are integrally formed of hard plastic materials by injection molding, the hard plastic parts are obtained after molding, which can ensure the structural strength. Optionally, the hard plastic material is adopted as hard engineering plastic, and the material type thereof is not limited to nylon, polyformaldehyde, polyester resin, polybutylene terephthalate, etc., which can be flexibly adjusted and set according to the actual demand, and is not limited herein.

Referring to FIG. 2 to FIG. 4, in an embodiment, when the blocking member 50 and the bracket assembly 30 are integrally formed by injection molding, the connecting member 20 can be made of, but is not limited to, thermoplastic plastics (such as polyvinyl chloride, etc.), thermoplastic elastomers (such as styrene, etc.) and thermosetting materials (such as polyurethane, etc.).

Reference is made to FIG. 5 and FIG. 6, FIG. 5 is a schematic sectional view taken along a line A-A in FIG. 1 according to yet still another embodiment, and FIG. 6 is a schematic sectional view taken along a line A-A in FIG. 1 according to still further embodiment. The difference between FIG. 5 and FIG. 6 lies in the position of the blocking member 50. In an embodiment, the bracket assembly 30 and the blocking member 50 are formed by two-component injection process. Specifically, the bracket assembly 30 is integrally formed by injection molding first, and then the blocking member 50 is integrally formed on the bracket assembly 30 by injection molding, so that the bracket assembly 30 and the blocking member 50 can be firmly jointed together.

Referring to FIG. 5 and FIG. 6, in an embodiment, the blocking member 50 is a flexible member. The spacing between the inner edge 52 of the blocking member 50 and the hole edge 111 of the through hole 11 is defined as *D1*, and where *D1*≥0 mm. The blocking member 50 tightly abuts against the panel surface of the glass panel 10 and is deformed. Specifically, the bracket assembly 30 is a hard plastic part. Optionally, the bracket assembly 30 and the blocking member 50 are formed by two-component injection process, so that the production efficiency can be ensured.

Referring to FIG. 5 and FIG. 6, in an embodiment, when the bracket assembly 30 and the blocking member 50 are formed by two-component injection process, the blocking member 50 may be disposed on the bottom surface of the bracket assembly 30, that is the side surface of the bracket assembly 30 facing the glass panel 10 (referring to FIG. 5). Alternatively, the blocking member 50 may be disposed at the hole wall of the fitting hole 31, and may be formed by extending the hole wall of the fitting hole 31 toward the side surface of the glass panel 10 (referring to FIG. 6).

Referring to FIG. 5 and FIG. 6, in an embodiment, the interference amount between the blocking member 50 and the panel surface of the glass panel 10 is defined as *D2*, where D2>0 mm. Optionally, D2 can be set to, but is not limited to, in the range of 0 mm to 3 mm. Thus, the applicant has researched and found that, when D2 is set in this range, the sealing performance between the blocking member 50 and the panel surface of the glass panel 10 can be better ensured.

Referring to FIG. 5, in an embodiment, whether the structure in which the blocking member 50 and the bracket assembly 30 are integrally formed by injection molding, or the structure in which the blocking member 50 and the bracket assembly 30 are formed by two-component injection process, the spacing between the hole edge 311 of the fitting hole 31 and the hole edge 111 of the through hole 11 is defined as *D3,* and where *D3*≥0 mm. That is, there is a gap between the hole edge 311 of the fitting hole 31 and the hole edge 111 of the through hole 11, which makes it more convenient to install the switch key assembly 40, which will not be affected by interference.

Referring to FIG. 5 and FIG. 6, in the case that the blocking member 50 and the bracket assembly 30 are formed by two-component injection process, he connecting member 20, the blocking member 50 and the bracket assembly 30 may be made of materials determined respectively according to the hardness of the connecting member 20. The specific examples are as follows.

When the hardness of the connecting member 20 is in the range of 50 Shore to 80 Shore, the connecting member 20 is, for example, of a thermoplastic encapsulation, which may be achieved by, but not limited to, thermoplastic plastics (such as polyvinyl chloride, etc.) or thermoplastic elastomers (such as styrene, etc.). The blocking member 50 is made of, for example, a soft material, which could be selected from, but is not limited to, ethylene propylene diene monomer rubber, polyvinyl chloride, styrene, polyurethane, etc. The bracket assembly 30 is, for example, a hard plastic part, which may specifically be made of a hard engineering plastic, and the material type thereof is not limited to nylon, polyformaldehyde, polyester resin, and polybutylene terephthalate. In this way, when the flexible material is selected for the connecting member 20, the hardness of the connecting member 20 is relatively low. In the production process, the injection stress is also relatively low, so that the cracking defect of the hole edge 111 of the through hole 11 is avoided.

When the hardness of the connecting member 20 is 80 Shore or more, the connecting member 20 is, for example, of a thermosetting encapsulation, which may be achieved by, but not limited to, a thermosetting material (such as polyurethane, etc.). The blocking member 50 is made of, for example, a soft material, which may include, but is not limited to, silicic acid gel, ethylene propylene diene monomer rubber, polyvinyl chloride, styrene, polyurethane, etc. The bracket assembly 30 is, for example, a hard plastic part, which may specifically be made of a hard engineering plastic, and the material type thereof is not limited to nylon, polyformaldehyde, polyester resin, and polybutylene terephthalate.

Referring to any one of FIG. 2 to FIG. 6, in an embodiment, the outer edge 22 of the connecting member 20 is further provided with a flange 23. The flange 23 is connected to the outer wall of the bracket assembly 30. In this way, the connecting member 20 is connected to the bracket assembly 30 by the flange 23, so that the connecting member 20 can be fixedly mounted on the bracket assembly 30.

It should be noted that the "flange 23" may be "a portion of the connecting member 20", that is, the "flange 23" and "other portions of the connecting member 20" are integrally formed. It is also possible that the "flange 23"is an independent member separable from "other portions of the connecting member 20", that is, the "flange 23" can be manufactured independently and then be combined with "other portions of the connecting member 20" as a whole.

Referring to FIG. 6, in an embodiment, the minimum spacing between a central axis of the through hole 11 (shown by the dotted line *O* in FIG. 6) and the edge of the glass panel 10 (not schematically shown) is defined as *S* (not schematically shown), the radius of the through hole 11 is defined as *r*, and the *S* and *r* satisfy the following expression: *S*≥3*r.* In this way, the glass stress intensity at the hole position and the state of the molded surface conformity can be ensured.

Referring to FIG. 2 and FIG. 8, in an embodiment, the window glass assembly further includes at least one first mounting member 61. At least one mounting hole 32 is formed on the bracket assembly 30. The first mounting member 61 is correspondingly and integrally formed on the hole wall of the mounting hole 32 by injection molding. The switch key assembly 40 is correspondingly connected to the at least one first mounting member 61 through the at least one second mounting member 62.

In an embodiment, two mounting holes 32 are provided, two first mounting members 61 are provided, and two second mounting members 62 are provided. The switch key assembly 40 is fixedly mounted on the bracket assembly 30 by correspondingly connecting the two second mounting members 62 to the two first mounting members 61.

In an embodiment, the first mounting member 61 is, for example, a nut and the second mounting member 62 is a bolt or screw corresponding to the nut. In addition, the torque between the first mounting member 61 and the hole wall of the mounting hole 32 is, for example, equal to or greater than 3 N·m.

In this way, in the assembling process, the switch key assembly 40 is pre-fixed on the bracket assembly 30 through a limiting structure thereof, and then is locked with the first mounting member 61 on the bracket assembly 30 after the second mounting member 62 extends through the hole on the switch key assembly 40. For example, the torque is 2 N·m, and the torque loss is no more than 15%.

As an alternative, the switch key assembly 40 may also be fixedly mounted on the bracket assembly 30 by other means, including, but not limited to, an engaging member, a pin, a rivet, an adhesive, or the like.

In an embodiment, a vehicle includes the window glass assembly of any of the above embodiments.

In the above-mentioned vehicle, the bracket assembly 30 is mounted on the glass panel 10 by the connecting member 20, and then the switch key assembly 40 is mounted on the bracket assembly 30. The key of the switch key assembly 40 can be inserted into the through hole 11 and extend out of the vehicle, so that the switch key assembly 40 can be integrated on the window glass assembly, which can improve the integration degree, and facilitate the mounting to the vehicle.

In an embodiment, the switch key assembly 40 can realize the functions including: (1) a function that can serve as a control switch for a door; (2) a function that can be used to control the lighting system, for example, control the lighting of the glass assembly; and (3) a function that can realize an integration of external control system of the vehicle body.

It should be noted that, the "injection molding" of the formation by injection molding in this embodiment should be understood in a broad sense, which simply refers to the integration of the final product, including but not limited to: the integration of the same material; the integration of different materials; and successively injection molding into a whole (e.g., two-component injection process).

The technical features of the embodiments above may be combined arbitrarily. To make the description concise, not all possible combinations of the technical features in the above embodiments are described. However, as long as there are no contradictions in the combinations of these technical features, all of the combinations shall be considered to be within the scope of the specification.

The embodiments above only represent several implementations of the present application, and the description thereof is relatively specific and detailed, but it should not be construed as limiting the scope of the patent. It should be noted that for those skilled in the art, various variants and improvements may be made without departing from the concept of the present application, and all these variants and improvements belong to the protection scope of the present application. Therefore, the scope of protection of the patent application shall be subject to the appended claims.

In the description of the present application, it is to be understood that orientations or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientations or positional relationships shown in the drawings. These terms are only intended for facilitating illustrating the present application and simplifying the illustration, rather than indicating or implying that the devices or elements referred to have to present particular orientations, and be constructed and operated in particular orientations, and therefore cannot be construed as limiting the present application.

In addition, the terms "first" and "second" are only intended for illustrative purposes, rather than being construed as indicating or implying relative importance or implicitly designating the number of the technical features as indicated. Thus, the features modified by "first" and "second" may explicitly or implicitly include at least one of the said features. In the illustrations of the present application, the term "a plurality of" means at least two, for example two or three, unless otherwise explicitly and specifically defined.

In the present application, unless otherwise expressly specified and defined, the terms "mounted", "connected to", "coupled" and "fixed" should be understood in a broad sense, for example, fixedly connected or detachably connected, or integrated formed; or mechanically connected or electrically connected; or directly connected or indirectly connected through an intermediate medium, or in an interior communication or mutual interaction relationship between two elements, unless otherwise specifically defined. For those of ordinary skill in the art, the specific meanings of the above-described terms in the present application may be understood according to specific circumstances.

In the present application, unless otherwise expressly stated and defined, the first feature, when being referred to as being located "above" or "below" the second feature, may be in direct contact with the second feature, or in indirect contact with the second feature via an intermediate feature. Moreover, the first feature, when being referred to as being disposed "on", "above" and "over" the second feature, may be disposed right above or obliquely above the second feature, or simply disposed at a level higher than the second feature. The first feature, when being referred to as being disposed "under", "below" and "beneath" the second feature, may be disposed directly below or obliquely below the second feature, or simply disposed at a level lower than the second feature.

It should be noted that, when an element is referred to as being "fixed to" or "disposed on" another element, it may be directly on the other element or an intermediate element may also be present. When an element is referred to as being "connected" to another element, it may be directly connected to the other element or there may be an intermediate element therebetween at the same time. The terms "vertical", "horizontal", "up", "down", "left", "right" and similar expressions used herein are only for the purpose of illustration, rather than presenting the only ways for implementation.

## Claims

1. A window glass assembly comprising:
a glass panel having a through hole formed thereon, the through hole extending through the glass panel in a thickness direction of the glass panel;
a connecting member fixedly arranged on a panel surface of the glass panel in a circumferential direction around the through hole;
a bracket assembly connected to the connecting member; and
a switch key assembly mounted on the bracket assembly, a key of the switch key assembly being inserted into the through hole.

2. The window glass assembly according to claim 1, wherein the connecting member is integrally formed between the panel surface of the glass panel and the bracket assembly by injection molding; or
the connecting member is an adhesive member, and is bonded and fixed to the panel surface of the glass panel and the bracket assembly.

3. The window glass assembly according to claim 2, wherein a spacing between an inner edge of the connecting member and a hole edge of the through hole is defined as *d,* and wherein *d*≥0.5 mm.

4. The window glass assembly according to claim 2, further comprising a blocking member connected to the bracket assembly,
wherein the blocking member abuts against the panel surface of the glass panel in the circumferential direction around the through hole, and is arranged between an inner edge of the connecting member and a hole edge of the through hole, and an outer edge of the blocking member is connected to the inner edge of the connecting member.

5. The window glass assembly according to claim 4, wherein the blocking member and the bracket assembly are integrally formed by injection molding.

6. The window glass assembly according to claim 4, wherein the blocking member is a rigid member, and a spacing between an inner edge of the blocking member and the hole edge of the through hole is defined as *D1*, and wherein *D1*≥2 mm.

7. The window glass assembly according to any one of claims 4 to 6, wherein the blocking member is a flexible member,
a spacing between an inner edge of the blocking member and the hole edge of the through hole is defined as *D1,* wherein *D1*≥0 mm, and
the blocking member tightly abuts against the panel surface of the glass panel and is deformed.

8. The window glass assembly according to claim 7, wherein the blocking member is disposed at an included angle to the panel surface of the glass panel; a spacing between an abutting part of the blocking member abutting against the panel surface of the glass panel and the through hole is less than a spacing between a portion of the blocking member connected to the bracket assembly and the through hole; or
the blocking member is perpendicular to the panel surface of the glass panel.

9. The window glass assembly according to claim 8, wherein at least two blocking members are provided, and are arranged in sequence in a sleeved manner in a radial direction of the through hole; and
a spacing between an inner edge of the blocking member closest to the through hole and the hole edge of the through hole is defined as *D1*, and wherein *D1*≥0 mm.

10. The window glass assembly according to any one of claims 7 to 9, wherein an interference amount between the blocking member and the panel surface of the glass panel is defined as *D2,* and wherein *D2*>0 mm.

11. The window glass assembly according to claim 10, wherein *D2* further satisfies *D2*≤3 mm.

12. The window glass assembly according to any one of claims 2 to 11, wherein a minimum spacing between a central axis of the through hole and an edge of the glass panel is defined as *S,* a radius of the through hole is defined as *r*, and *S* and *r* satisfy the following expression: *S*≥3*r.*

13. The window glass assembly according to any one of claims 2 to 12, wherein the connecting member is a thermoplastic encapsulation, and a hardness of the connecting member is in a range of 50 Shore to 80 Shore; and
the connecting member is a thermosetting encapsulation, and a hardness of the connecting member is above 80 Shore.

14. The window glass assembly according to any one of claims 1 to 13, further comprising at least one first mounting member;
wherein at least one mounting hole is formed on the bracket assembly, and the at least one first mounting member is integrally formed on a hole wall of a corresponding one of the at least one mounting hole by injection molding; and
the switch key assembly is connected to the at least one first mounting member by at least one second mounting member.

15. A vehicle, comprising the window glass assembly according to any one of claims 1 to 14.
